# FASCICULE DE BREVET EUROPEEN

(11) **EP 3 749 898 B1**
(45) Date de publication et mention de la délivrance du brevet: **11.10.2023**
(21) Numéro de dépôt: 19703337.6
(22) Date de dépôt: 08.02.2019
(51) Int. Cl.: F24D 3/16, F24D 3/12, E04C 2/52, F24D 3/14, F28D 1/047, F28D 1/02, F28D 21/00

(54) **PROCEDE DE REALISATION D'UN COMPOSANT D'UN FAUX-PLAFOND RAYONNANT MODULAIRE, COMPOSANT ET FAUX-PLAFOND CORRESPONDANTS**
VERFAHREN ZUR HERSTELLUNG EINER KOMPONENTE EINER MODULAREN STRAHLENDEN ZWISCHENDECKENKOMPONENTE, ZUGEHÖRIGE KOMPONENTE UND ZUGEHÖRIGE ZWISCHENDECKE
METHOD FOR THE PRODUCTION OF A COMPONENT OF A MODULAR RADIATING FALSE-CEILING COMPONENT, CORRESPONDING COMPONENT AND CORRESPONDING FALSE CEILING

(30) Priorité: 09.02.2018 FR 1851117
(43) Date de publication de la demande: 16.12.2020
(73) Titulaire: ILO TECHNOLOGY, 38460 Cremieu (FR); THERMACOME, 50240 Saint James (FR)
(72) Inventeur: KIEFFER, Florent, 35300 FOUGERES (FR); BIETRIX, Christophe, 69008 LYON (FR); AIT-AMEUR, Mehdi, 50140 ROMAGNY (FR); MEUDEC, Antoine, 35300 FOUGERES (FR)
(74) Mandataire: Corret, Hélène
(86) Numéro de dépôt international: PCT/EP2019/053177
(87) Numéro de publication internationale: WO 2019/155007

(56) Documents cités:
- EP-A1- 1 004 827
- WO-A1-2008/056386
- WO-A1-2016/130033
- DE-U1-202011 002 988
- KR-A- 20060 000 395
- US-B1- 6 311 764

## Description

L'invention concerne le domaine technique des faux-plafonds utilisés pour ajuster la température de l'air ou température ambiante d'une pièce.

Un faux-plafond est classiquement réalisé à partir d'une pluralité de plaques ou de dalles, fixées sur des supports appropriés, un volume étant ainsi défini entre le faux-plafond et le plafond de la pièce (appelé plénum).

Des systèmes ont été développés pour assurer le confort thermique d'une pièce en utilisant ce volume.

On peut notamment citer le document EP 1 167 889 qui décrit un procédé dans lequel de l'air est injecté dans le volume de faux-plafond, cet air circulant dans ce volume pour y être réchauffé ou refroidi par des moyens appropriés, avant d'être introduit dans la pièce à climatiser par une ouverture ménagée dans le faux-plafond.

L'air du faux-plafond peut être réchauffé au moyen de plaques chauffantes disposées au-dessus de la face supérieure du faux-plafond.

Il peut être refroidi grâce à des moyens de refroidissement disposés également dans le volume de faux-plafond, avant l'ouverture d'introduction d'air dans la pièce.

Ce procédé et ce dispositif apportent satisfaction.

Ils présentent cependant l'inconvénient de nécessiter une alimentation électrique à la fois pour les plaques chauffantes et les moyens de refroidissement.

Par ailleurs, même si un tel dispositif diminue considérablement les mouvements d'air dans la pièce par rapport aux systèmes de climatisation classiques, des mouvements d'air subsistent, ce qui peut toujours générer un inconfort pour les personnes présentes dans la pièce.

Enfin, les systèmes basés sur une circulation d'air (transfert de chaleur ou de froid par convection) génèrent toujours des gradients de température relativement importants dans la pièce concernée.

Ont déjà été proposés des panneaux modulaires destinés à être fixés sur un composant d'un bâtiment, comme un plafond suspendu, tels que décrits dans le document WO 2008/056386.

Cependant, ces panneaux ne font pas partie intégrante d'un plafond suspendu mais sont destinés à être fixés sur ce plafond.

Le document EP1004827 décrit un procédé de réalisation d'un composant de faux-plafond rayonnant modulaire conforme au préambule de la revendication 1.

L'invention a pour objet de pallier ces inconvénients en proposant un faux-plafond modulaire du type rayonnant destiné à une pièce d'un bâtiment comportant un réseau hydraulique d'alimentation en eau chaude ou froide, ce faux-plafond étant raccordé à ce réseau pour émettre ou absorber de l'énergie thermique dans la pièce et comprenant une pluralité de composants.

Ainsi, l'invention concerne un procédé de réalisation d'un composant de faux-plafond rayonnant modulaire, ce faux-plafond étant destiné à une pièce d'un bâtiment équipé d'un réseau hydraulique d'alimentation en eau chaude ou froide, à partir d'une dalle standard dont la résistance thermique est supérieure ou égale à 2.5 K.m²/W, ce procédé comportant les étapes suivantes :
- On forme à partir de cette dalle au moins un premier élément dont la résistance thermique est inférieure à 0.33 K.m²/W,
- On positionne sur ledit premier élément un échangeur thermique,
- On place sur ledit échangeur thermique un deuxième élément thermiquement isolant et
- On intègre des moyens de liaison entre l'échangeur et le réseau.

Selon l'invention, le deuxième élément provient, 15 comme le premier élément, de ladite dalle. Ainsi, la dalle est coupée en deux parties par tout moyen de découpe approprié, notamment une lame de scie.

Selon un mode de réalisation qui ne fait pas partie de l'invention, ce deuxième élément peut être indépendant de la dalle dont est extrait le premier élément. C'est notamment le cas lorsque le premier élément est extrait de la dalle par fraisage.

On comprend que, dans tous les cas, le premier élément comprendra le parement de la dalle, si celle-ci en présente un.

Selon le type d'échangeur, le procédé comporte une étape supplémentaire consistant à usiner le premier élément et/ou le deuxième élément pour y former une cavité susceptible de recevoir au moins en partie ledit échangeur.

L'invention concerne également un composant de faux-plafond rayonnant modulaire, ce faux-plafond étant destiné à une pièce d'un bâtiment équipé d'un réseau hydraulique d'alimentation en eau chaude ou froide, ce composant comprenant les caractéristiques de la revendication 4.

Dans des modes de réalisation avantageux, on a de plus recours à l'une et/ou à l'autre des dispositions suivantes :
- le premier élément comporte le parement éventuel de ladite dalle ;
- le premier élément et/ou le deuxième élément présentent une cavité susceptible de recevoir au moins en partie ledit échangeur.
- le rapport entre la résistance thermique des deux éléments est supérieur à 1 ;
- ledit échangeur comprend un tube directement ou indirectement raccordé audit réseau, de telle sorte que ledit tube est parcouru par le fluide fourni par le réseau ;
- ledit tube forme une trajectoire courbe, par exemple une sinusoïde ou une spirale ;
- ledit échangeur comprend un caloduc relié au réseau par contact ;
- ledit échangeur comprend également au moins un moyen diffuseur adjacent audit tube ou audit caloduc ;
- ledit échangeur comprend un moyen diffuseur relié audit réseau par contact ;
- le composant comprend un caloduc adjacent audit moyen diffuseur ;
- le moyen diffuseur est une plaque en un matériau métallique ou composite ;
- le caloduc se présente sous la forme d'un tube ou d'une plaque ;
- le contact entre le moyen diffuseur ou le caloduc et le réseau est réalisé par un système de clipsage ;
- il comprend un parement sur la face du composant destinée à être visible dans la pièce.

L'invention concerne également un faux-plafond rayonnant modulaire pour un bâtiment comprenant un réseau hydraulique d'alimentation en eau chaude et/ou froide, le plafond comprenant une pluralité de composants selon l'invention.

Ainsi, on comprend qu'un faux-plafond réalisé à partir de composants de ce type ne nécessite pas un système d'alimentation spécifique notamment électrique, mais utilise un réseau hydraulique déjà présent dans le bâtiment. Ceci est le cas pour la plupart des bâtiments tertiaires.

De plus, l'échangeur thermique qui assure le rayonnement de l'énergie thermique provenant de ce réseau, est directement intégré dans le composant, ce qui évite la présence d'éléments supplémentaires à l'intérieur du volume de faux-plafond ou en excroissance sur la partie visible du faux-plafond. Ceci présente de nombreux avantages en termes d'encombrement, d'esthétique, de fabrication et d'installation.

Le procédé selon l'invention permet d'utiliser toutes les dalles disponibles dans le commerce et donne donc une grande liberté de conception aux architectes.

En effet, à partir d'une dalle de faux-plafond standard, pouvant comporter un parement quelconque, le procédé selon l'invention propose de réaliser un composant de faux-plafond rayonnant comportant le même parement que celui de cette dalle standard. Ce procédé permet donc de passer d'une dalle passive du point de vue de la climatisation à un composant actif présentant le parement souhaité lors de la conception du bâtiment.

Le faux-plafond rayonnant obtenu répond donc ainsi aux exigences esthétiques définies pour le bâtiment.

Par ailleurs, la maintenance du faux-plafond est très simple puisque chaque composant peut être remplacé indépendamment les uns des autres, lorsqu'un problème survient au niveau par exemple de l'échangeur thermique.

Enfin, ce faux-plafond est du type rayonnant, dans la mesure où une part très importante de l'énergie thermique (typiquement de l'ordre de 80%) est transmise à la pièce par rayonnement, ce qui génère de faibles gradients de température dans cette pièce et évite tout mouvement d'air pouvant créer un inconfort.

On rappelle ici que la transmission de la chaleur ou du froid peut s'effectuer par conduction, par convection ou par rayonnement.

Le rayonnement est un mode d'échange d'énergie par émission et absorption de radiations électromagnétiques.

L'échange thermique par rayonnement se fait suivant le processus suivant :
- Emission : il y a conversion de l'énergie fournie par la source en énergie électromagnétique
- Transmission : La transmission de cette énergie électromagnétique se fait par propagation des ondes avec éventuellement absorption par le milieu traversé
- Réception (absorption) : il y a conversion du rayonnement électromagnétique incident en énergie thermique.

Ainsi, lorsque le faux-plafond réchauffe la pièce, c'est le faux-plafond qui rayonne et les corps physiques de la pièce (les personnes, les objets...) qui absorbent l'énergie thermique émise par le faux-plafond.

Dans le cas du rafraichissement, ce sont les corps physiques de la pièce qui rayonnent et le plafond qui absorbe l'énergie thermique émise par ces corps.

L'invention sera mieux comprise et d'autres buts, avantages et caractéristiques de celle-ci apparaîtront plus clairement à la lecture de la description qui suit et qui est faite au regard des dessins annexés sur lesquels :
La figure 1 est une vue en perspective d'un exemple de réalisation d'un composant de faux-plafond selon l'invention, représenté partiellement pour mieux illustrer ses éléments constitutifs.
La figure 2 comprend les figures 2A et 2B illustrant une variante de l'exemple de réalisation selon la figure 1, la figure 2A étant une vue en perspective et la figure 2B une vue en coupe.
La figure 3 comprend les figures 3A et 3B qui sont deux vues en perspective illustrant un deuxième exemple de réalisation d'un composant de faux-plafond selon l'invention ; la figure 3B étant une vue partiellement arrachée de la figure 3A.
La figure 4 comprend les figures 4A et 4B qui sont deux vues en perspective d'un troisième exemple de réalisation d'un composant selon l'invention, la figure 4B étant une vue partiellement arrachée de la figure 4A pour mieux illustrer les éléments constitutifs du composant.
La figure 5 comprend les figures 5A et 5B qui sont des vues en perspective d'une variante de réalisation du composant de faux-plafond illustré à la figure 4, la figure 5B étant une vue partiellement arrachée de la figure 5A.
La figure 6 est une vue en coupe de deux composants selon l'invention, positionnés de façon adjacente.
La figure 7 comprend les figures 7A et 7B (la figure 7A étant une vue en perspective et la figure 7B une vue en coupe partielle de la figure 7A) et représente une variante de l'exemple de réalisation de l'échangeur selon la figure 1.

Les éléments communs aux différentes figures seront désignés par les mêmes références.

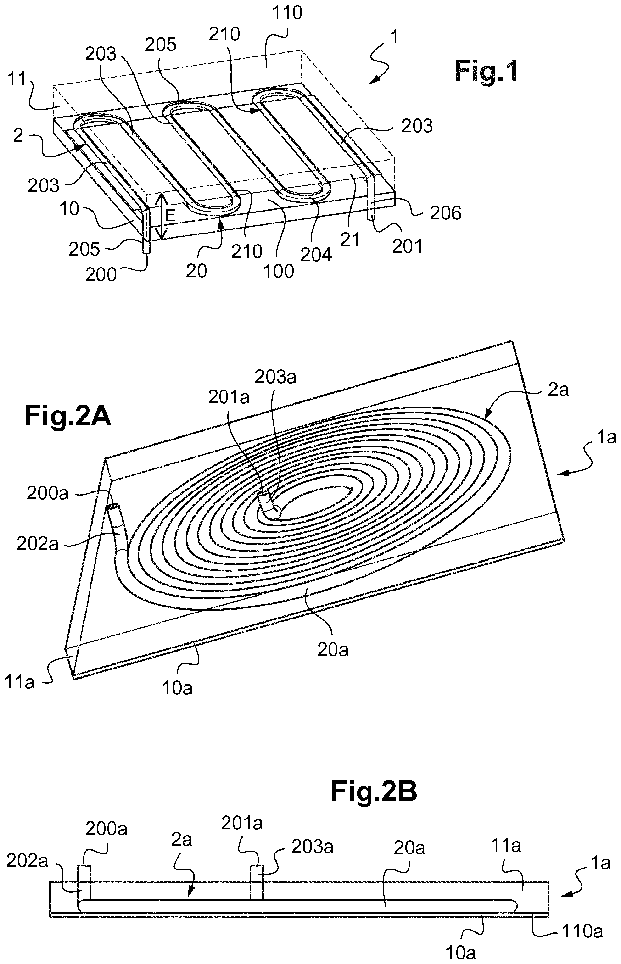

Il est tout d'abord fait référence à la figure 1 qui illustre un composant de faux-plafond présentant la forme d'une dalle 1 de forme parallélépipédique qui a été coupée selon son épaisseur E, en deux parties 10 et 11 afin de pouvoir y insérer un échangeur thermique 2.

En pratique, la partie supérieure 11 de la dalle est usinée pour définir une cavité correspondant à l'encombrement de l'échangeur. On peut également prévoir d'usiner la partie inférieure 10 de la dalle, voire les deux parties. Cette opération d'usinage est réalisée lorsque la forme de l'échangeur le requiert, mais elle n'est pas systématique.

Cette dalle 1 peut être une dalle standard, déjà disponible sur le marché. Elle peut notamment être réalisée en polystyrène expansé, en plâtre, en fibre minérale, en laine de verre ou encore en laine de roche par exemple.

De manière générale, cette dalle est réalisée en un matériau isolant thermiquement. Elle présente de façon générale une résistance thermique supérieure à 2.5 K.m²/W.

Dans l'ensemble de la description, on comprend qu'un matériau thermiquement isolant est un matériau dont la conductivité thermique est inférieure à 1.5 K.m²/W.

La partie supérieure 11 de la dalle est représentée en pointillés pour pouvoir mieux illustrer l'échangeur 2.

Lorsque la dalle est mise en place dans une pièce, la face 110 de la partie supérieure 11 est visible depuis la pièce, tandis que la partie inférieure 10 de la dalle est, elle, tournée vers le plénum.

Cette partie supérieure 11 peut présenter un parement, de nature quelconque, non illustré sur les figures ou encore constituer ce parement.

De façon préférée, les caractéristiques de cette dalle sont telles qu'elles permettent de couper la dalle en deux parties, par un moyen de découpe approprié.

Dans ce cas, les épaisseurs de ces deux parties sont de préférence choisies de façon à ce que l'échangeur soit au plus près du volume de la pièce à chauffer ou à rafraichir.

Cependant, selon un mode de réalisation qui ne fait pas partie de l'invention, il suffit que le composant de faux-plafond comporte un premier élément provenant d'une dalle standard, dont la résistance thermique est inférieure à 0.33 K.m²/W et qui comportera le parement éventuel de la dalle, un deuxième élément indépendant de la dalle dont la résistance thermique sera de préférence supérieure à celle du premier élément et un échangeur thermique disposé entre le premier élément et le deuxième élément.

Dans ce cas, le premier élément peut être extrait de la dalle standard par une opération de fraisage.

En pratique, le deuxième élément isolant sera placé du côté du plénum pour éviter la déperdition d'énergie dans celui-ci, tandis que l'autre face de l'échangeur destinée à être tournée vers la pièce sera recouverte par le premier élément en un matériau moins isolant que celui formant le deuxième élément, pour favoriser le transfert d'énergie dans la pièce.

De façon préférée, le rapport entre la résistance thermique du deuxième élément et celle du premier élément est supérieur à 1.

L'échangeur 2 est, dans cet exemple de réalisation, composé de deux éléments : un tube 20 et un moyen diffuseur 21.

Le tube 20 forme une sinusoïde qui s'étend sur sensiblement toute la surface de la face supérieure 100 de la partie inférieure 10 de la dalle.

Il comprend ainsi une série de parties droites 203, une première série de tronçons courbes 204 et une deuxième série de tronçons courbes 205.

Chaque tronçon courbe 204 de la première série relie une première extrémité d'un tronçon droit 203 à une première extrémité d'un autre tronçon droit 203 adjacent.

Chaque tronçon courbe 205 de la deuxième série relie une deuxième extrémité, opposée à la première, d'un tronçon droit 203 à une deuxième extrémité, opposée à la première, d'un tronçon droit 203 adjacent.

La première et la dernière partie droite 203 se prolongent par un tronçon droit 205, 206 qui fait un angle non nul avec la partie droite 203 correspondante. En pratique, chaque tronçon droit 205, 206 est sensiblement perpendiculaire à la partie droite qu'il prolonge et sa longueur est suffisante pour traverser la partie inférieure 10 de la dalle et déboucher ainsi dans le plénum.

Ce tube 20 est ouvert à chacune des extrémités 200 et 201 des tronçons droits 205, 206, par lesquelles le tube 20 est relié au réseau hydraulique d'alimentation du bâtiment dans lequel le faux-plafond est installé.

La liaison entre le tube et le réseau hydraulique peut être effectuée au moyen de raccords flexibles classiques (non illustrés sur la figure).

Ce tube peut être réalisé en matériau à base de polyethylène.

L'invention n'est pas limitée à cette forme pour le tube et celui-ci pourrait être conformé différemment, par exemple en forme du U ou de Z.

Le moyen diffuseur 21 prend ici la forme d'une plaque en un matériau métallique.

Cette plaque recouvre une zone importante de la face supérieure 100 de la partie inférieure 10 de la dalle, typiquement comprise entre 50 et 100 % et elle est située entre cette face supérieure 100 et le tube 20.

De façon générale, cette plaque est réalisée en un matériau présentant une conductivité thermique supérieure à 10 W/m-kelvin. Elle peut notamment être composée d'aluminium ou de cuivre lorsqu'elle est réalisée en métal. Elle peut également être formée en un matériau organique, comme du graphite, ou encore en un matériau composite comprenant un polymère ainsi qu'un matériau dont la conductivité est supérieure à 10 W/m-Kelvin. On peut notamment envisager un polymère chargé en graphite puis complexé avec un métal ou un alliage métallique.

Ce moyen diffuseur 21 permet de répartir l'énergie thermique apportée par le tube 20 grâce au réseau hydraulique auquel il est raccordé, et ce, sur toute la surface de la partie inférieure 10 de la dalle 1.

La plaque présente des rainures transversales 210 dans lesquelles sont insérées les parties droites 203 du tube 20.

La présence de ces rainures permet d'assurer le blocage du tube par rapport au moyen diffuseur et d'augmenter leur surface de contact.

Ainsi, l'association du tube 20 et du moyen diffuseur 21 permet d'assurer une température uniforme de la dalle 1, et donc d'améliorer l'apport ou l'absorption d'énergie par rayonnement dans la pièce, lorsque la dalle 1 est en cours d'utilisation.

En effet, le réseau hydraulique peut être utilisé pour apporter de l'eau chaude ou froide et ainsi réchauffer ou refroidir la pièce équipée du faux-plafond selon l'invention.

Les figures 2A et 2B illustrent une variante de réalisation de la figure 1 dans laquelle l'échangeur se compose toujours d'un tube et d'un diffuseur, le tube étant enroulé sur lui-même (en forme d'escargot).

Dans cet exemple, la dalle 1a dans laquelle est inséré l'échangeur comprend une partie inférieure 10a qui est un parement et une partie supérieure 11a en une matière isolante. Ces deux parties résultent ici de la découpe d'une dalle standard dont la résistance thermique est supérieure à 2.5 K.m²/W. La résistance thermique du premier élément du composant, lequel correspond ici au parement de la dalle, est inférieure à 0.33 K.m²/W. Bien entendu, le premier élément pourrait comporter non seulement le parement mais également une partie du reste de la matière isolante de la dalle, dès lors que sa résistance thermique reste inférieure à 0.33 K.m²/W.

Le parement peut être réalisé également en une matière isolante. Il présente, de préférence, une résistance thermique inférieure à celle de la partie supérieure 11a.

Cette dalle peut être une dalle du commerce, coupée en deux pour retirer le parement. La partie supérieure de la dalle, correspondant au deuxième élément du composant, est ensuite usinée pour définir une cavité correspondant à la forme de l'échangeur thermique 2a.

Comme expliqué précédemment, le composant de faux-plafond peut également être constitué à partir de deux éléments indépendants (un parement provenant de la dalle standard et un élément en matière isolante indépendant de la dalle) connectés l'un avec l'autre après insertion de l'échangeur. Cependant, un tel mode de réalisation ne fait pas partie de l'invention.

L'échangeur comporte un tube 20a enroulé sur lui-même et s'étendant sensiblement dans un plan. La forme du tube apparait plus clairement sur la figure 2A qui montre la partie supérieure de la dalle avec (en transparence) le tube 20a.

Dans la mesure où il est conçu pour recouvrir une zone importante de la face inférieure 110a de la partie supérieure 11a de la dalle, il n'est pas nécessaire que l'échangeur 2a comprenne un diffuseur.

En effet, dans ce cas, le tube joue également le rôle d'un diffuseur.

Le tube 20a est ouvert à chacune de ses extrémités 200a et 201a. Elles sont situées dans un plan différent de celui dans lequel s'étend la partie enroulée du tube, à laquelle elles sont raccordées par un tronçon droit 202a et 203a. Ces deux extrémités débouchent ainsi à l'extérieur de la dalle 1a pour pouvoir être raccordées au réseau.

Une fois l'échangeur 2a inséré dans la partie supérieure 11a de la dalle, le parement 10a est fixé contre la face inférieure 110a de la partie supérieure 11a de la dalle.

Ce parement 10a sera visible depuis la pièce, après installation de la dalle, tandis que la partie supérieure 11a sera tournée vers le plénum.

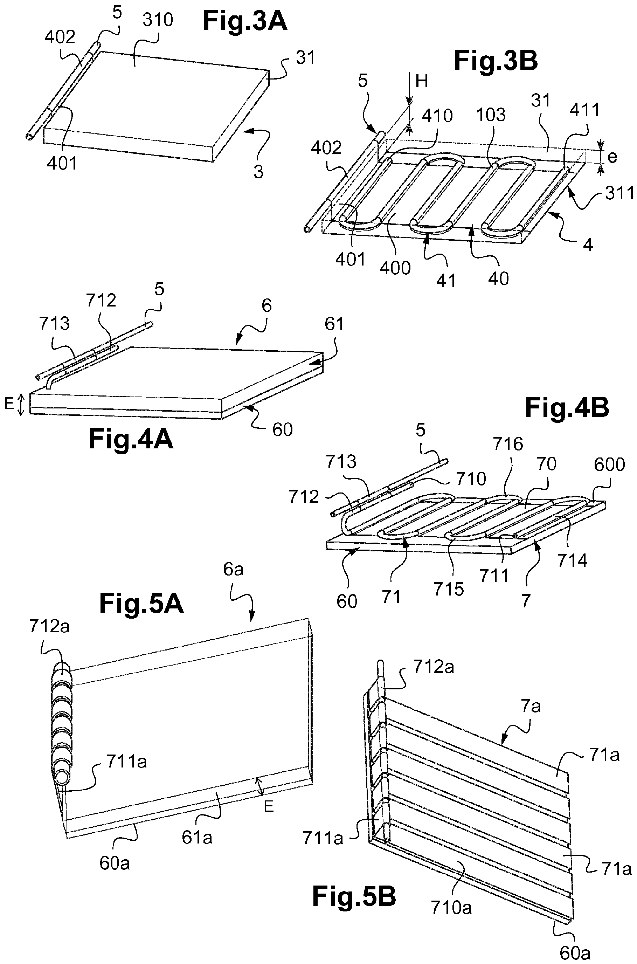

Il est maintenant fait référence aux figures 3A et 3B qui illustrent un deuxième exemple de réalisation d'un composant de faux-plafond selon l'invention.

Ce composant se présente là encore sous la forme d'une dalle 3 de forme parallélépipédique qui peut être une dalle standard dans laquelle a été inséré un échangeur thermique 4, après découpe de la dalle selon son épaisseur pour obtenir une partie supérieure et une partie inférieure.

La figure 3A illustre la partie supérieure 31 de la dalle 3 dont la face supérieure 310 est tournée vers le volume de faux-plafond, lorsque la dalle est installée, et dont la face inférieure 311 est tournée vers la partie inférieure de la dalle (non illustrée sur les figures) et qui est, elle, visible depuis la pièce.

L'épaisseur de la partie inférieure de la dalle est choisie pour que sa résistance thermique soit inférieure à 0.33 K.m²/W. Elle sera, de préférence, inférieure à celle de la partie supérieure, tournée vers le plénum.

La partie inférieure peut également consister seulement en un parement disposé contre l'échangeur 4.

Comme expliqué précédemment, le deuxième élément isolant peut également être indépendant de la dalle.

Cependant, un tel mode de réalisation ne fait pas partie de l'invention.

L'échangeur 4 est, ici encore, composé de deux éléments : un moyen diffuseur 40 et un caloduc 41.

Le caloduc 41 est ici positionné entre la face inférieure 311 de la partie supérieure 31 de la dalle 3 et le moyen diffuseur 40.

Le caloduc 41 consiste ici en un tube présentant la forme générale d'une sinusoïde et qui est fermé à ses deux extrémités 410 et 411. Ce tube est réalisé en un métal, par exemple en aluminium ou en cuivre, ou en un alliage de métaux. Il est rempli d'un fluide qui change de phase en fonction de la température et de la pression. La pression à l'intérieur du tube est faible pour favoriser des changements de phase à une température relativement basse.

Le moyen diffuseur 40 est composé de deux parties : une première partie 400 présentant sensiblement la forme d'une plaque parallèle à la face inférieure 311 et une deuxième partie 401 s'étendant sensiblement perpendiculairement à la première partie en la prolongeant à une extrémité.

La première partie 400 recouvre une zone importante de la surface de la face 311, typiquement comprise entre 50 et 100 %.

Elle comporte des rainures 410 dans lesquelles sont insérées les parties droites du caloduc de façon à assurer son blocage en position et augmenter la surface de contact.

La deuxième partie 401 présente une hauteur H supérieure à l'épaisseur e de la partie supérieure 31 de la dalle 3. Elle se prolonge, du côté opposé à la plaque 400, par un moyen de clipsage 402 sur un tube 5 du réseau hydraulique du bâtiment.

Ainsi, dans ce mode de réalisation, l'échangeur 4 fonctionne de la façon suivante : la liaison entre l'échangeur thermique 4 et le réseau hydraulique 5 est réalisée grâce au moyen diffuseur 40 qui est relié à ce réseau grâce au moyen de clipsage 402 et à la deuxième partie 401.

Le moyen diffuseur transmet ainsi de l'énergie thermique au caloduc 41 et diffuse également l'énergie produite par le caloduc sur toute la surface de la dalle 3.

L'invention n'est pas limitée au mode de réalisation illustré à la figure 3B. En particulier, le caloduc pourrait se présenter sur la forme d'une plaque étanche et définissant une cavité dans laquelle sont ménagées des rainures pour la circulation d'un fluide à changement de phase.

Ce fluide peut être un gaz ou un liquide, typiquement de l'eau ou de l'acétone.

Par ailleurs, dans ce mode de réalisation, le caloduc pourrait également être omis, l'échangeur ne comportant alors qu'un moyen diffuseur clipsé sur le réseau hydraulique d'alimentation.

Différents moyens de clipsage peuvent être envisagés. Ils peuvent ainsi se présenter sous la forme d'une pièce indépendante du moyen diffuseur ou au contraire, être intégrés au moyen diffuseur qui est alors conformé de manière appropriée.

Par ailleurs, les moyens de clipsage peuvent être situés en périphérie de la dalle ou encore en partie centrale de celle-ci.

Il est maintenant fait référence aux figures 4A et 4B qui illustrent un troisième exemple de réalisation d'un composant de faux-plafond modulaire selon l'invention.

Ce composant se présente sous la forme d'une dalle 6 de forme parallélépipédique qui peut être une dalle standard. Après découpe de la dalle, selon son épaisseur E, en une partie supérieure 61 et une partie inférieure 60, un échangeur 7 a été inséré entre ces deux parties.

La figure 4B illustre donc la partie inférieure 60 (comprenant le parement éventuel de la dalle et correspondant au premier élément du composant de faux-plafond) de la dalle 6 dont la face supérieure 600 est tournée vers la partie supérieure 61 de la dalle (correspondant au deuxième élément du composant) qui est, elle, tournée vers le volume de faux-plafond.

Comme précédemment, la résistance thermique de la partie inférieure 60 est inférieure à 0.33 K.m²/W et, de préférence, également inférieure à celle de la partie supérieure 61. De même, le deuxième élément du composant pourrait être indépendant de la dalle.

Cependant, un tel mode de réalisation ne fait pas partie de l'invention.

L'échangeur 7 est, là encore, composé de deux éléments : un moyen diffuseur 70 et un caloduc 71.

Ce caloduc est positionné entre la face supérieure 600 de la partie inférieure 60 de la dalle 6 et le moyen diffuseur 70.

Le moyen diffuseur 70 est composé d'une plaque parallèle à la face supérieure 600 de la partie inférieure 60 de la dalle qui recouvre une partie importante de la surface de la face 600, typiquement comprise entre 50 et 100 %.

Le caloduc 71 consiste en un tube présentant la forme générale d'une sinusoïde et qui est fermé à ses deux extrémités 710 et 711. Ce tube est réalisé en un métal ou en alliage de métaux, par exemple un alliage d'aluminium. Il est rempli d'un fluide qui change de phase en fonction de la température et de la pression.

La figure 4B montre que le caloduc 71 présente une partie plane qui est positionnée sur le moyen diffuseur 70. Cette partie plane comprend une série de parties droites 714, une première série de tronçons courbes 715 et une deuxième série de tronçons courbes 716, ces tronçons courbes reliant les parties droites entre elles. Elle se prolonge par une branche 712 sensiblement perpendiculaire à la partie plane et qui est reliée à un tube 5 du réseau hydraulique du bâtiment, par un moyen de clipsage 713. Cette branche 712 est située au-dessus de la partie supérieure 61.

Comme précédemment, le diffuseur 70 comporte des rainures dans lesquelles sont insérées les parties droites 714 du caloduc de façon à assurer son blocage en position et augmenter la surface de contact.

Dans ce mode de réalisation, l'échangeur 7 fonctionne de la façon suivante : la liaison entre l'échangeur et le réseau hydraulique est réalisée grâce au caloduc 71 qui est relié à ce réseau grâce à la branche 712 et au moyen de clipsage 713.

Le caloduc reçoit ainsi de l'énergie du réseau hydraulique, ce qui le conduit à produire lui-même de l'énergie qui est ensuite diffusée sur toute la surface de la dalle grâce au moyen diffuseur 70.

L'invention n'est pas limitée au mode de réalisation illustré à la figure 4. En particulier, dans une variante de réalisation, le caloduc pourrait se présenter sous la forme d'une plaque clipsée sur un tube du réseau hydraulique du bâtiment dans lequel est installé le faux-plafond selon l'invention.

Cette variante est illustrée à la figure 5.

Dans cette variante, le composant de faux-plafond comporte une dalle 6a avec une partie inférieure 60a formant un parement et une partie supérieure 61a réalisée en un matériau isolant.

Comme expliqué précédemment au regard des figures 2A et 2B, il peut s'agir d'une dalle du commerce coupée en deux selon son épaisseur E selon l'invention ou de deux éléments indépendants (élément en matière isolante indépendant de la dalle et premier élément provenant de la dalle et comportant son parement) connectés l'un avec l'autre après insertion de l'échangeur.

Comme expliqué précédemment, la résistance thermique de la partie supérieure 61a de la dalle destinée à être tournée vers le plénum est supérieure à celle de la partie inférieure 60a, laquelle est inférieure à 0.33 K.m²/W.

Sur la figure 5B, la partie supérieure de la dalle n'est pas illustrée pour que l'échangeur soit mieux visible.

L'échangeur 7a consiste ici en un caloduc qui comporte une série de six plaques 71a disposées parallèlement les unes aux autres.

Chacune de ces plaques comporte une forme en L, avec une première (longue) branche 710a disposée entre les parties inférieure et supérieure 60a et 61a du composant et une deuxième (courte) branche 711a, sensiblement perpendiculaire à la première, et destinée à être clipsée sur un tube 5 du réseau hydraulique par un moyen de clipsage 712a. La branche 711a est donc plus longue que l'épaisseur de la partie supérieure 61a.

Dans cette variante de réalisation, la présence d'un diffuseur n'est pas nécessaire, le caloduc 7a jouant également le rôle d'un diffuseur.

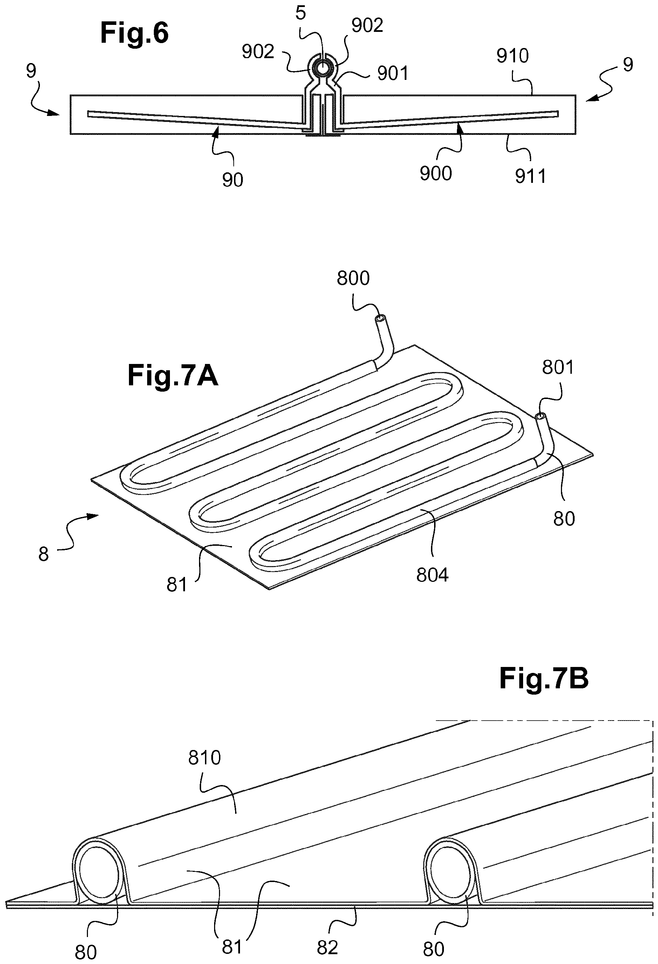

La figure 6 illustre, vue en coupe, deux composants 9 de faux-plafond selon l'invention, du type illustré à la figure 5.

Dans cet exemple de réalisation, l'échangeur est limité à un caloduc 90 et comprend une première partie 900 sous la forme d'une plaque se prolongeant par une deuxième partie 901 en saillie par rapport à cette plaque. Cette deuxième partie se prolonge par des moyens de clipsage 902 sur un tube 5 du réseau hydraulique.

Dans cet exemple de réalisation des dalles 9, chaque dalle est coupée en biseau, de telle sorte que la plaque 900 s'étend de façon inclinée par rapport à la face supérieure 910 ou inférieure 911 de la dalle 3.

Ceci permet d'améliorer le fonctionnement du caloduc en favorisant le changement de phase du fluide présent à l'intérieur du caloduc.

La figure 6 montre ainsi que des dalles disposées de manière adjacente dans le faux-plafond modulaire peuvent être clipsées sur le même tube du réseau hydraulique. Ceci permet de simplifier le réseau de tubes.

On peut noter que la figure 6 pourrait également illustrer un échangeur composé d'un diffuseur sous la forme d'une plaque comportant une partie plane et une partie angulée pour permettre le clipsage de la plaque sur le tube 5.

Il est maintenant fait référence aux figures 7A et 7B qui illustrent une variante de réalisation de l'échangeur 2 illustré à la figure 1.

Dans cette variante de réalisation, l'échangeur 8 est composé de trois éléments : un tube 80 et deux moyens diffuseurs 81 et 82. Le moyen diffuseur 81 est tourné vers le plénum lorsque l'échangeur 8 est inséré dans le composant.

Là encore, le tube 80 forme une sinusoïde et il est ouvert à chacune de ses extrémités 800 et 801, grâce auxquelles le tube 80 est relié au réseau hydraulique, au moyen de raccords flexibles classiques.

Les deux moyens diffuseurs 81 et 82 se présentent sous la forme d'une plaque en un matériau présentant une conductivité thermique par exemple supérieure à 10 W/m-kelvin.

La plaque 82 est plane tandis que la plaque 81 comporte des rainures 810 dans lesquelles sont insérées les parties droites 804 du tube 80.

Dans une autre variante, les deux plaques pourraient comporter des rainures en vis-à-vis pour y loger les parties droites du tube.

De façon générale, le composant selon l'invention s'étend sensiblement dans un plan.

Dans un exemple de réalisation d'un composant selon l'invention :
- l'élément destiné à être tourné vers le plénum peut être réalisé en laine de roche et présenter une épaisseur de 40 mm (résistance thermique = 1.2 m².K/W)
- le parement peut être réalisé en plâtre BA 13 et présenter une épaisseur de 12,5 mm (résistance thermique = 0,04 m².K/W)

On comprend qu'un faux-plafond peut être réalisé à partir d'une pluralité de composants selon l'invention raccordés au réseau hydraulique du bâtiment.

Ces composants sont classiquement raccordés les uns aux autres en série ou en parallèle.

De préférence, ces raccordements sont réalisés par des moyens qui peuvent être montés et démontés facilement et notamment sans outil.

De façon générale, le premier élément, le deuxième élément et l'échangeur sont fixés ensemble par tout moyen et notamment par collage. Lorsqu'une cavité est prévue dans au moins l'un des éléments pour recevoir l'échangeur, la fixation des éléments avec l'échangeur est encore plus efficace.

Comme il va de soi et comme il résulte également de ce qui précède, la présente invention n'est pas limitée aux modes de réalisation plus particulièrement décrits. Elle en embrasse au contraire toutes les variantes et notamment celles où le parement du faux-plafond ou l'élément l'isolant thermiquement du plénum n'est pas présent sur les composants mais est commun à plusieurs composants.

## Revendications

1. Procédé de réalisation d'un composant de faux-plafond rayonnant modulaire, ce faux-plafond étant destiné à une pièce d'un bâtiment équipé d'un réseau hydraulique d'alimentation en eau chaude ou froide, à partir d'une dalle standard dont la résistance thermique est supérieure ou égale à 2.5 K.m²/W, ce procédé comportant les étapes suivantes :
- On forme à partir de cette dalle au moins un premier élément (10, 10a, 60, 60a),
- On positionne sur ledit premier élément un échangeur thermique (2, 2a, 4, 7, 7a, 8),
- On place sur ledit échangeur thermique un deuxième élément (11, 61) thermiquement isolant et
- On intègre des moyens de liaison entre l'échangeur et le réseau, **caractérisé en ce que** le deuxième élément (11, 61) provient, comme le premier élément (10, 10a, 60, 60a), de ladite dalle de forme parallélépipédique, cette dernière étant alors coupée en deux parties selon son épaisseur et **en ce que** la résistance thermique dudit premier élément (10, 10a, 60, 60a), selon son épaisseur, est inférieure à 0.33 K.m²/W.

2. Procédé selon la revendication 1, comportant une étape supplémentaire consistant à usiner le premier élément et/ou le deuxième élément pour y former une cavité susceptible de recevoir au moins en partie ledit échangeur.

3. Procédé selon l'une quelconque des revendications 1 ou 2, dans lequel ladite dalle comporte un parement et le premier élément comporte ce parement.

4. Composant de faux-plafond rayonnant modulaire pour une pièce d'un bâtiment équipé d'un réseau hydraulique d'alimentation en eau chaude ou froide, comprenant un premier élément (10, 10a, 60, 60a) réalisé à partir d'une dalle standard dont la résistance thermique est supérieure ou égale à 2.5 K.m²/W, un deuxième élément (11, 61) en matériau isolant thermiquement et un échangeur thermique (2, 2a, 4, 7, 7a, 8), disposé entre les deux éléments ainsi que des moyens de liaison (200, 201 ; 200a, 201a ; 401, 402 ; 712, 713 ; 722a ; 800, 801) dudit échangeur audit réseau (5), de façon à recevoir de l'énergie thermique de ce réseau, **caractérisé en ce que** le premier élément et le deuxième élément proviennent de la même dalle standard de forme parallélépipédique, coupée selon son épaisseur et **en ce que** ledit premier élément présente une résistance thermique selon son épaisseur qui est inférieure à 0.33 K.m²/W.

5. Composant selon la revendication 4, dans lequel le premier élément comporte le parement éventuel de la dalle.

6. Composant selon l'une quelconque des revendications 4 ou 5, dans lequel le premier élément et/ou le deuxième élément présentent une cavité susceptible de recevoir au moins en partie ledit échangeur.

7. Composant selon l'une quelconque des revendications 4 à 6, dans lequel le rapport entre la résistance thermique des deux éléments est supérieur à 1.

8. Composant selon l'une quelconque des revendications 4 à 7, dans lequel ledit échangeur (2, 2a, 8) comprend un tube (20, 20a, 80) directement ou indirectement raccordé audit réseau, de telle sorte que ledit tube est parcouru par le fluide fourni par le réseau.

9. Composant selon l'une quelconque des revendications 4 à 7, dans lequel ledit échangeur (7, 7a) comprend un caloduc (71, 71a, 90) relié au réseau par contact.

10. Composant selon l'une quelconque des revendications 8 ou 9, dans lequel ledit échangeur (2) comprend également au moins un moyen diffuseur (21 ; 81, 82 ; 70) adjacent audit tube (20, 80) ou audit caloduc (71).

11. Composant selon l'une quelconque des revendications 4 à 7, dans lequel ledit échangeur comprend un moyen diffuseur (40) relié audit réseau par contact.

12. Composant selon la revendication 11 comprenant un caloduc (41) adjacent audit moyen diffuseur (40).

13. Faux-plafond rayonnant modulaire pour un bâtiment comprenant un réseau hydraulique d'alimentation en eau chaude et/ou froide, le plafond comprenant une pluralité de composants selon l'une des revendications 4 à 12.

## Patentansprüche

1. Verfahren zur Herstellung einer Komponente für eine abgehängte strahlende modulare Decke, welche Decke für den Einsatz in einem Raum eines Gebäudes bestimmt ist, der mit einem Wasserversorgungssystem für warmes oder kaltes Wasser ausgestattet ist,
ausgehend von einer Standardplatte, die einen Wärmeübergangswiderstand von 2,5 K.m²/W oder höher aufweist,
wobei das Verfahren die folgenden Schritte umfasst:
- Aus der Platte wird mindestens ein erstes Element (10, 10a, 60, 60a) geformt,
- auf diesem ersten Element wird ein Wärmetauscher (2, 2a, 4, 7, 7a, 8) positioniert,
- auf dem Wärmetauscher wird ein wärmeisolierendes zweites Element (11, 61) platziert, und
- es werden Mittel zur Verbindung zwischen dem Wärmetauscher und dem Netz eingebaut,
**dadurch gekennzeichnet,**
**dass** das zweite Element (11, 61), wie das erste Element (10, 10a, 60, 60a), aus der Platte mit der Form eines Parallelepipeds geformt ist, wobei die Platte dann in zwei Teile entsprechend ihrer Dicke geteilt ist, und
**dass** der Wärmeübergangswiderstand des ersten Elements (10, 10a, 60, 60a) über seine gesamte Dicke kleiner ist als 0,33 K.m²/W.

2. Verfahren nach Anspruch 1,
umfassend einen weiteren Schritt, bei dem das erste Element und/oder das zweite Element bearbeitet werden, um einen Hohlraum zu bilden, der zumindest teilweise den Wärmetauscher aufnehmen kann.

3. Verfahren nach einem der Ansprüche 1 oder 2,
bei dem die Platte mit einer Deckschicht versehen ist, und das erste Element mit einer solchen Deckschicht versehen ist.

4. Modulares Deckenstrahlerbauteil für eine abgehängte Decke für einen Raum in einem Gebäude, das mit einem Wasserversorgungssystem zur Versorgung mit warmem oder kaltem Wasser ausgestattet ist,
aufgebaut aus einem ersten Element (10, 10a, 60, 60a), das aus einer Standardplatte geformt ist, deren Wärmeübergangswiderstand größer oder gleich 2,5 K.m²/W ist, aufgebaut aus einem zweiten Element (11, 61) aus einem wärmeisolierenden Material und einem Wärmetauscher (2, 2a, 4, 7, 7a, 8), der zwischen den beiden Elementen angeordnet ist,
sowie mit Verbindungsmitteln (200, 201; 200a, 201a; 401, 402; 712, 713; 722a; 800, 801) mittels deren der Wärmetauscher mit dem Netz verbunden ist, um thermische Energie von dem Netz zu erhalten,
**dadurch gekennzeichnet,**
**dass** das erste Element und das zweite Element aus der gleichen Standardplatte mit der gleichen Form eines Parallelepipeds stammen, und
in ihrer Dicke geschnitten sind,
wobei das erste Element einen Wärmeübergangswiderstand über seine Dicke von weniger als 0,33 K.m²/W aufweist.

5. Komponente nach Anspruch 4,
das erste Element die mögliche Deckschicht der Platte umfasst.

6. Komponente nach einem der Ansprüche 4 oder 5,
wobei das erste Element und/oder das zweite Element einen Hohlraum aufweisen, der zumindest teilweise den Wärmetauscher aufnehmen kann.

7. Komponente nach einem der Ansprüche 4 bis 6,
wobei das Verhältnis zwischen dem Wärmeübergangswiderstand der beiden Elemente größer ist als 1.

8. Komponente nach einem der Ansprüche 4 bis 7,
wobei der Wärmetauscher (2, 2a, 8) ein Rohr (20, 20a, 80) umfasst, das direkt oder indirekt mit dem Netz verbunden ist, so dass das Rohr von dem von dem Netz gelieferten Fluid durchströmt wird.

9. Komponente nach einem der Ansprüche 4 bis 7,
wobei der Wärmetauscher (7, 7a) ein Wärmerohr (71, 71a, 90) umfasst, das mit dem Netz durch Kontakt verbunden ist.

10. Komponente nach einem der Ansprüche 8 oder 9,
wobei der Wärmetauscher (2) auch mindestens ein Diffusormittel (21; 81, 82; 70) neben dem Rohr (20, 80) oder dem Wärmerohr (71) umfasst.

11. Komponente nach einem der Ansprüche 4 bis 7,
wobei der Wärmetauscher ein Diffusormittel (40) umfasst, das durch Kontakt mit dem Netz verbunden ist.

12. Komponente nach Anspruch 11,
umfassend ein Wärmerohr (41), das an das genannte Diffusormittel (40) angrenzt.

13. Modulare, strahlende abgehängte Decke für ein Gebäude mit einem hydraulischen Netz zur Versorgung mit warmem und/oder kaltem Wasser, wobei die Decke eine Vielzahl von Komponenten gemäß einem der Ansprüche 4 bis 12 umfasst.

## Claims

1. Method for producing a modular radiating false ceiling component, this false ceiling being intended for a room of a building equipped with a hot-water or cold-water hydraulic supply network, starting from a standard tile whose thermal resistance is greater than or equal to 2.5 K.m²/W, this method comprising the following steps:
- at least a first element (10, 10a, 60, 60a) is formed from this tile,
- a heat exchanger (2, 2a, 4, 7, 7a, 8) is positioned on said first element,
- a thermally insulating second element (11, 61) is placed on said heat exchanger, and
- means of connection between the exchanger and the network are incorporated,
**characterized in that** the second element (11, 61), like the first element (10, 10a, 60, 60a), is derived from said tile of parallelepipedal shape, the latter then being cut into two parts across its thickness, and **in that** the thermal resistance of said first element (10, 10a, 60, 60a), across its thickness, is less than 0.33 K.m²/W.

2. Method according to Claim 1, comprising an additional step consisting in machining the first element and/or the second element in order to form therein a cavity capable of at least partly receiving said exchanger.

3. Method according to either one of Claims 1 and 2, wherein said tile comprises a facing and the first element comprises this facing.

4. Modular radiating false ceiling component for a room of a building equipped with a hot-water or cold-water hydraulic supply network, comprising a first element (10, 10a, 60, 60a) produced from a standard tile whose thermal resistance is greater than or equal to 2.5 K.m²/W, a second element (11, 61) made of thermally insulating material and a heat exchanger (2, 2a, 4, 7, 7a, 8) arranged between the two elements, and also connection means (200, 201; 200a, 201a; 401, 402; 712, 713; 722a; 800, 801) for connecting said exchanger to said network (5) so as to receive thermal energy from this network, **characterized in that** the first element and the second element are derived from the same standard tile of parallelepipedal shape that is cut across its thickness, and **in that** said first element has a thermal resistance across its thickness that is less than 0.33 K.m²/W.

5. Component according to Claim 4, wherein the first element comprises the possible facing of the tile.

6. Component according to either one of Claims 4 and 5, wherein the first element and/or the second element have or has a cavity capable of at least partly receiving said exchanger.

7. Component according to any one of Claims 4 to 6, wherein the ratio between the thermal resistance of the two elements is greater than 1.

8. Component according to any one of Claims 4 to 7, wherein said exchanger (2, 2a, 8) comprises a tube (20, 20a, 8) directly or indirectly connected to said network such that said tube is traversed by the fluid provided by the network.

9. Component according to any one of Claims 4 to 7, wherein said exchanger (7, 7a) comprises a heat pipe (71, 71a, 90) connected to the network by contact.

10. Component according to either one of Claims 8 and 9, wherein said exchanger (2) also comprises at least one diffusing means (21; 81, 82; 70) adjacent to said tube (20, 80) or to said heat pipe (71).

11. Component according to any one of Claims 4 to 7, wherein said exchanger comprises a diffusing means (40) connected to said network by contact.

12. Component according to Claim 11 comprising a heat pipe (41) adjacent to said diffusing means (40).

13. Modular radiating false ceiling for a building comprising a hot-water and/or cold-water hydraulic supply network, the ceiling comprising a plurality of components according to one of Claims 4 to 12.
